(19) Europäisches Patentamt
European Patent Office
Office européen des brevets

(11) **EP 2 105 237 A2**

(12) **EUROPÄISCHE PATENTANMELDUNG**

(43) Veröffentlichungstag:
**30.09.2009 Patentblatt 2009/40**

(51) Int Cl.:
***B23K 11/25*** *(2006.01)*

(21) Anmeldenummer: **09165420.2**

(22) Anmeldetag: **07.05.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**

(62) Dokumentnummer(n) der früheren Anmeldung(en) nach Art. 76 EPÜ:
**07107647.5 / 1 990 122**

(71) Anmelder: **Nimak GmbH**
**57537 Wissen (DE)**

(72) Erfinder: **Nickel, Paul**
**57537 Wissen (DE)**

(74) Vertreter: **Patentanwälte**
**Dr. Solf & Zapf**
**Hauptstrasse 97**
**51465 Bergisch-Gladbach (DE)**

Bemerkungen:
Diese Anmeldung ist am 14-07-2009 als Teilanmeldung zu der unter INID-Code 62 erwähnten Anmeldung eingereicht worden.

(54) **Verfahren zum Steuern einer Elektroden-Anpresskraft bei einer Schweißzange**

(57) Die vorliegende Erfindung betrifft ein Verfahren zum Steuern einer Elektroden-Anpresskraft (F) einer Arbeitselektrode (2) einer Schweißzange, wobei die Arbeitselektrode (2) für eine Schließbewegung mittels eines elektromotorischen Servoantriebes unter Zwischenlage eines zu verschweißenden Werkstückes (8) gegen eine Gegenelektrode (4) bewegt und bei Werkstück-Kontakt durch ein bestimmtes Servo-Antriebsmoment mit einer für einen Schweißvorgang vorbestimmten Soll-Anpresskraft ($F_{soll}$) beaufschlagt wird. Während der Elektroden-Schließbewegung wird geprüft, ob ein jeweils aktueller Elektrodenabstand mit einer in einer Steuerung vorgegebenen Soll-Werkstückdicke (W) übereinstimmt.

Im Falle einer Übereinstimmung wird umgehend das für die erforderliche Anpresskraft ($F_{soll}$) bestimmte Antriebsmoment vorgegeben und der Schweißvorgang ausgelöst. Im Falle einer Nicht-Übereinstimmung, das heißt wenn der aktuelle Elektrodenabstand noch größer als die vorgegebene Soll-Werkstückdicke (W) ist, wird zunächst durch ein geeignetes erhöhtes Antriebsmoment die Arbeitselektrode (2) weiter bewegt, bis der Elektrodenabstand der vorgegebenen Werkstückdicke (W) entspricht, und erst dann wird der Schweißvorgang ausgelöst. Durch die Erfindung können automatisch eventuelle Luftspalte zwischen den Werkstückteilen (8a, 8b) beseitigt (verfügt) werden.

FIG.6

FIG.7

FIG.8

**Beschreibung**

Die vorliegende Erfindung betrifft gemäß dem Oberbegriff des Patentanspruchs 1 ein Verfahren zum Steuern einer Elektroden-Anpresskraft einer Arbeitselektrode einer Schweißzange, wobei die Arbeitselektrode für eine Schließbewegung mittels eines elektromotorischen Servoantriebes unter Zwischenlage eines zu verschweißenden Werkstückes gegen eine Gegenelektrode bewegt und bei Werkstück-Kontakt durch ein bestimmtes Servo-Antriebsmoment mit einer für einen Schweißvorgang vorbestimmten Anpresskraft beaufschlagt wird, und wobei während der Elektroden-Schließbewegung geprüft wird, ob ein jeweils aktueller Elektrodenabstand mit einer in einer Steuerung vorgegebenen Soll-Werkstückdicke übereinstimmt, wobei entweder im Falle einer Übereinstimmung umgehend das für die erforderliche Anpresskraft bestimmte Antriebsmoment vorgegeben und der Schweißvorgang ausgelöst wird, oder im Falle einer Nicht-Übereinstimmung, das heißt wenn der aktuelle Elektrodenabstand noch größer als die vorgegebene Soll-Werkstückdicke ist, zunächst durch ein geeignetes erhöhtes Antriebsmoment die Arbeitselektrode weiter bewegt wird, bis der Elektrodenabstand der vorgegebenen Werkstückdicke entspricht, und erst dann der Schweißvorgang ausgelöst wird.

Weiterhin betrifft die Erfindung auch eine Schweißzange, die nach dem erfindungsgemäßen Verfahren arbeitet.

Das Dokument WO 00/71291 A1 beschreibt ein solches Verfahren, wobei es grundsätzlich bekannt ist, bei einem Schweißvorgang ein insbesondere aus zwei Blechen bestehendes Werkstück durch eine Erhöhung der Elektrodenkraft zu verfügen, d. h. einen eventuell zwischen den Teilen vorhandenen Spalt zu beseitigen. Dazu wird im Falle eines durch eine zu große Werkstückdicke festgestellten Spaltes die Kraft der Schweißelektroden auf einen höchstmöglichen Wert erhöht. Wenn nachfolgend eine korrekte Dicke festgestellt wird, wird die Schweißkraft auf einen vorbestimmten Wert reduziert. Mit diesem bekannten Verfahren können daher nicht in allen Fällen optimale Ergebnisse erzielt werden, weil sich der vorbestimmte Wert der Schweißkraft durch eine elastische Gegenkraft der Werkstücke reduzieren kann.

Die EP 1 428 608 B1 beschreibt ein besonderes Verfahren zum Steuern einer Elektroden-Anpresskraft, wobei ein elektrischer bzw. elektromotorischer Antrieb verwendet wird, um einerseits die Arbeitselektrode über einen Arbeitshub gegen ein Werkstück zu bewegen und andererseits auch anschließend bei Werkstück-Kontakt mit der jeweils erforderlichen Anpresskraft zu beaufschlagen, indem durch einen bestimmten Arbeitsstrom ein bestimmtes Antriebsmoment vorgegeben wird. Das bekannte Verfahren hat sich bislang in der Praxis gut bewährt, weil es stets und auch weitgehend unabhängig von wechselnden Betriebsbedingungen (wie insbesondere unterschiedlichen Umgebungstemperaturen, die in der Regel zu Änderungen von Reibwerten im System und zu Viskositätsänderungen von Schmiermitteln führen) eine hohe Fügequalität und Prozesssicherheit gewährleistet. In einer bevorzugten Variante des bekannten Verfahrens wird zunächst einmalig eine gewünschte Soll-Anpresskraft der Arbeitselektrode festgelegt, und es wird mit geeigneten Mitteln ein dazu erforderlicher Arbeitsstrom für den elektrischen Antrieb ermittelt. Etwa zeitgleich dazu, also unmittelbar zeitlich davor oder danach und dadurch praktisch bei den gleichen Betriebsbedingungen, wird ein bestimmter Fahrstrom des elektrischen Antriebs für eine einmal festgelegte, eigentlich beliebige, aber jedenfalls konstante Fahrgeschwindigkeit für die Hubbewegung, insbesondere für den eigentlichen Arbeitshub, ermittelt. Nachfolgend wird bei späteren Hubbewegungen, insbesondere in jedem späteren Arbeitshub, die tatsächliche Fahrgeschwindigkeit überwacht und erforderlichenfalls, wenn die Ist-Geschwindigkeit von der zuvor ermittelten konstanten Fahrgeschwindigkeit abweicht, durch eine entsprechende Änderung des Fahrstroms wieder auf die konstante Fahrgeschwindigkeit gebracht. Dies bedeutet, dass die Fahrgeschwindigkeit durch Anpassung des Fahrstroms und des daraus resultierenden Antriebsmomentes konstant gehalten wird, wobei die dazu erforderliche Stromänderung ermittelt wird. Wenn dann anschließend die Arbeitselektrode zum Anlagekontakt am jeweiligen Werkstück kommt, so wird in Abhängigkeit von der zuvor ermittelten Stromänderung auch der Arbeitsstrom in einem entsprechenden Verhältnis geändert, wodurch dann die daraus resultierende Anpresskraft dem Sollwert entspricht. Somit erfolgt die Kraftsteuerung durch konstant halten der Fahrgeschwindigkeit und Ermittlung einer dafür notwendigen Stromänderung, wobei dann im Verhältnis der Fahrstromänderung auch der Arbeitsstrom geändert wird. Dadurch wird eine - z.B. reibungsbedingte - Schwergängigkeit im System selbsttätig durch eine Erhöhung des Antriebsmomentes so kompensiert, dass die gewünschte, effektive Soll-Anpresskraft stets konstant bleibt.

In der Praxis tritt nun aber noch eine weitere Schwierigkeit auf, und zwar können häufig - bedingt durch ungenau gefertigte Teile - im Schweißbereich zwischen den zu verschweißenden Werkstück-Teilen (Blechen) Luftspalte vorhanden sein. In diesem Fall liegen die Teile im Schweißbereich nicht aneinander, so dass es beim Schweißen zu einer so genannten Spritzerbildung und vielfach sogar zu "losen" Schweißpunkten kommen kann. Für eine hinreichende Qualität und Haltbarkeit der Schweißpunkte wäre es deshalb erforderlich, den jeweiligen Luftspalt vor dem Schweißprozess zu verfügen. Bekannte Roboter-Schweisszangen sind dazu nur durch eine generelle Erhöhung der Soll-Anpresskraft in der Lage. Dies gilt nicht nur für elektromotorische, sondern auch für pneumatische Zangensysteme. Eine solche generelle Krafterhöhung kann aber ebenfalls zu Fehlschweißungen führen, sofern nämlich an dem jeweiligen Schweißpunkt einmal kein Luftspalt vorhanden ist, weil in diesem Fall die Anpresskraft für den Schweißvorgang eigentlich zu hoch ist.

Der vorliegenden Erfindung liegt die Aufgabe zu Grunde, das bekannte Steuerverfahren für die Anpresskraft so zu verbessern, dass durch selbsttätige Anpassung an die jeweilige Werkstück-Situation die Schweißqualität weitergehend deutlich gesteigert wird. Ferner soll auch eine entsprechende Schweißzange zur Durchführung des verbesserten Verfahrens geschaffen werden.

Erfindungsgemäß wird dies durch die Merkmale des jeweiligen unabhängigen Anspruchs 1 bzw. 3 erreicht. Somit wird erfindungsgemäß bei Erreichen eines der vorgegebenen Werkstückdicke entsprechenden Elektrodenabstandes die Arbeitselektrode mit einer Gesamt-Anpresskraft beaufschlagt, die sich aus der Soll-Anpresskraft und einer zum Verfügen eines Werkstück-Luftspaltes erforderlichen (d. h. gerade zum Verfügen ausreichenden) Zusatzkraft zusammensetzt. Dadurch wirkt effektiv beim Schweißvorgang genau die Soll-Anpresskraft, so dass eine hohe Schweißqualität gewährleistet ist.

Vorteilhafte Ausgestaltungen der Erfindung sind in den abhängigen Ansprüchen enthalten.

Das erfindungsgemäße Verfahren macht vorzugsweise zunächst Verwendung von dem eingangs erläuterten Verfahren gemäß EP 1 428 608 B1. Dies bedeutet, dass während der Elektroden-Schließbewegung die Fahrgeschwindigkeit konstant gehalten wird, indem bei Bedarf der Fahrstrom entsprechend geändert wird. Im gleichen Veränderungsverhältnis wird dann auch der jeweilige Arbeitsstrom geändert, um bei Werkstück-Kontakt eine konstante Soll-Anpresskraft zu gewährleisten. Erfindungsgemäß ist dabei nun vorgesehen, dass während der Elektroden-Schließbewegung, und zwar zumindest innerhalb eines letzten Bewegungsbereichs vor Erreichen des Werkstückkontaktes, fortlaufend geprüft wird, ob ein jeweils aktueller Elektrodenabstand mit einer in einer Steuerung vorgegebenen Soll-Werkstückdicke übereinstimmt. Diese Soll-Werkstückdicke wird zuvor als Gesamtdicke der jeweils zu verschweißenden und ohne Luftspalt aneinander liegenden Werkstück-Teile vorgegeben. Wenn nun bei der Elektroden-Schließbewegung der aktuelle Elektrodenabstand noch nicht der Soll-Werkstückdicke entspricht, wird ein - im Falle eines vorhandenen Luftspaltes - schon vorher auftretender Werkstückkontakt lediglich als eine "Schwergängigkeit" im System gewertet und nach dem an sich bekannten Verfahren durch Erhöhung des Stromes und des Antriebsmomentes so kompensiert, dass die Fahrgeschwindigkeit weiter konstant gehalten wird. Dadurch erhöht sich auch die Anpresskraft, wodurch die Werkstückteile entgegen einer als Federkraft wirkenden Gegenkraft zusammengedrückt werden, so dass der Luftspalt verfügt wird. Wenn dann letztendlich der aktuelle Elektrodenabstand dem vorgegebenen Sollwert der Werkstückdicke entspricht, setzt sich die tatsächliche Elektroden-Anpresskraft aus der Summe der für den eigentlichen Schweißvorgang vorbestimmten Soll-Anpresskraft zuzüglich einer der jeweiligen Werkstück-Gegenkraft (Federkraft) entgegen wirkenden Zusatzkraft zusammen. Daraus resultieren somit - unabhängig von den jeweiligen Werkstückverhältnissen und eventuellen Luftspalten - stets optimale Schweißpunkte, weil für den Schweissprozess auf die Werkstückteile in jedem Fall effektiv nur genau die vorgegebene Soll-Anpresskraft wirkt, denn die eventuell durch einen vorher vorhandenen Luftspalt bewirkte Zusatzkraft wirkt lediglich gegen die Werkstück-Federkraft, so dass sich diese Kraftanteile gegenseitig aufheben. Der Schweißvorgang wird in jedem Fall dann ausgelöst, wenn der aktuelle Elektrodenabstand der Soll-Werkstückdicke entspricht. Es spielt demnach keine Rolle mehr, ob im Schweißbereich der Werkstückteile ein Luftspalt vorhanden ist oder nicht.

Die Erfindung schafft demnach erstmals ein automatisch adaptives System zum selbsttätigen Erkennen und bedarfsweisen Beseitigen (Verfügen) von Luftspalten. Die Erfindung trägt somit zu einer gravierenden Qualitätssteigerung und Erhöhung der Prozesssicherheit bei Schweißverbindungen bei.

Im Zusammenhang mit der Erfindung ist es wichtig, die Schweisszange beziehungsweise deren Steuerung und Antrieb bezüglich der jeweiligen Zangengeometrie genau zu kalibrieren, um den jeweiligen Istwert des Elektrodenabstandes feststellen und mit der vorgegebenen Werkstückdicke vergleichen zu können. Dazu wird ein spezielles Kalibrierverfahren im Folgenden noch genauer erläutert werden.

Anhand der Zeichnungen soll im Folgenden die Erfindung beispielhaft genauer erläutert werden. Es zeigen:

Fig. 1 bis 4      stark schematische Seitenansichten von Schweißelektroden in verschiedenen Situationen während einer Kalibrierung des Elektrodenantriebes beziehungsweise einer Antriebssteuerung,

Fig.5      eine Schnittansicht eines Werkstückes mit zwei ohne Luftspalt aneinander liegenden, zu verschweißenden Werkstückteilen,

Fig. 6 bis 8      schematische Ansichten eines Schweißvorganges mit Verfügen eines Werkstück- Luftspaltes.

In den Zeichnungsfiguren sind von einer Schweißzange lediglich zwei Schweißelektroden vereinfacht dargestellt, und zwar eine Arbeitselektrode 2 und eine Gegenelektrode 4. Die Elektroden 2, 4 sind an nicht dargestellten zangenartigen Elektrodenarmen befestigt, wobei zumindest die Arbeitselektrode 2 über ihren Elektrodenarm mittels eines elektromotorischen Antriebs (ebenfalls nicht dargestellt) antreibbar und mit einer Anpresskraft beaufschlagbar ist. Als Antrieb kann ein Elektro-Linearmotor verwendet werden, wobei es sich um einen Rotationsmotor mit nachgeschalteten Antriebsmitteln handeln kann, die die Rotationsbewegungen des Motors in lineare Antriebsbewegungen des Elektrodenarms der Arbeitselektrode 2 umsetzen. Als Antriebsmittel ist z.B. ein Spindeltrieb geeignet. Der Motor ist zweckmäßig als Servomotor ausgeführt, der im Zusammenwirken mit einer Steuerung (Regelung) vorgebbare Positionen anfahren und beibehalten kann. Zudem wirkt der Motor mit einer Messeinrichtung zusammen, die die jeweils aktuelle Position (z.B. den Drehwinkel bezogen auf eine Anfangsposition) bestimmt. Diese Messung erfolgt über einen Drehgeber, insbesondere über einen Resolver anhand von Messimpulsen, die in einem Zähler gezählt werden. Der Motor wird über einen Umsetzer betrieben. Beispielsweise kann die Steuerung so ausgelegt sein, dass der Resolver pro Motorumdrehung eine bestimmte Anzahl (z.B. 4096) Impulse erzeugt, die im Umsetzer noch erhöht werden können (z.B. auf 8000 Messimpulse pro Motorumdrehung). Die Steuerung kann dadurch eine Motorumdrehung durch zählen von zum Beispiel 8000 Messimpulsen feststellen.

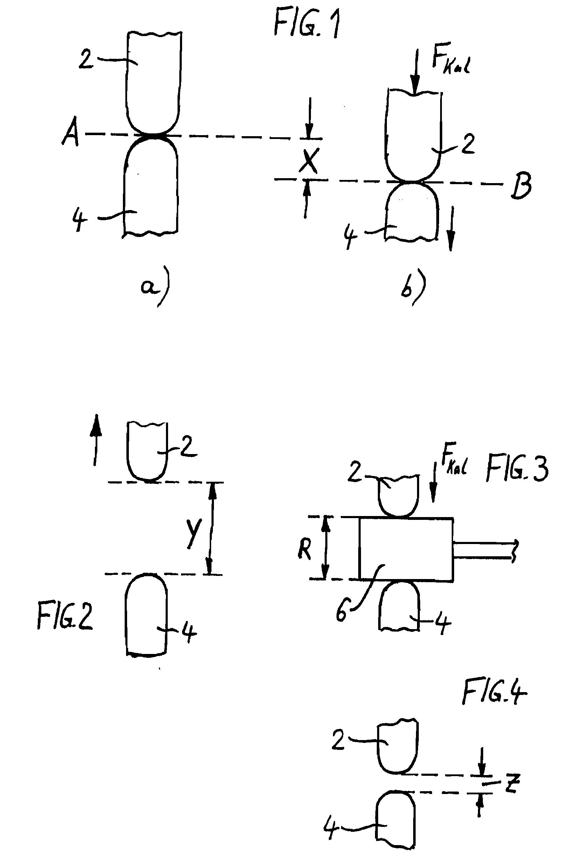

Weiterhin ergibt sich ein Verhältnis zwischen der Motorumdrehung und dem Hubweg der Arbeitselektrode 2, wobei dieses Verhältnis von der jeweiligen Zangengeometrie abhängt. Um über das Zählen der Messimpulse auf den Hubweg der Arbeitselektrode 2 schließen zu können, muss demnach eine Kalibrierung des Antriebs und der Steuerung erfolgen. Dies wird nun anhand der Fig. 1 bis 4 erläutert.

Schritt 1: In einem ersten Schritt des Kalibrierverfahrens wird die Zange geschlossen, bis die Arbeitselektrode 2 zum Anlagekontakt an der Gegenelektrode 4 gelangt (Position A in Fig. 1a). Die Arbeitselektrode 2 wird dabei durch Beaufschlagen des Antriebs mit einem bestimmten Arbeitsstrom und -moment mit einer bestimmten Anpresskraft (Kalibrierkraft $F_{kal}$) beaufschlagt, wodurch sich aufgrund einer systemeigenen Durchbiegung eine Position B gemäß Fig. 1b ergibt. Das Maß der Durchbiegung ist in Fig. 1 mit X eingezeichnet. Die Steuerung ordnet der Position B den aktuell vorliegenden Zählerstand der Messimpulse zu (z.B. 100.000).

Schritt 2: Gemäß Fig. 2 wird in einem zweiten Schritt die Zange geöffnet, und zwar bevorzugt bis zu einer maximalen Öffnungsposition Y. Der Sinn dieser bevorzugten Maßnahme wird im Folgenden noch erläutert werden. Die Steuerung erfasst die Öffnungsposition Y durch die jeweilige Anzahl der Messimpulse (z.B. 200.000).

Schritt 3: In einem dritten Schritt wird gemäß Fig. 3 die Zange auf ein bestimmtes Referenzmaß R (z.B. 50 mm) geschlossen, indem die Arbeitselektrode 2 gegen einen Referenzkörper 6 gefahren und durch ein bestimmtes Soll-Antriebsmoment mit der Kalibrierkraft $F_{kal}$ beaufschlagt wird. Dadurch tritt hierbei die entsprechende Durchbiegung X gemäß Fig. 1 ebenfalls auf. Die Steuerung erfasst diese Position R über die Zahl der Messimpulse (z.B. 120.000) und kann dann das Verhältnis V zwischen Anzahl von Messimpulsen und Elektrodenweg feststellen, und zwar durch die Differenz zwischen den Messimpulsen $i_R$ und $i_B$ in den Positionen R (Fig. 3) und B (Fig. 1 b) bezogen auf das Maß R. Folglich ergibt sich das Verhältnis V aus:

$$V=(i_R - i_B)/R$$

Mit den lediglich beispielhaft in Klammern angegebenen und nicht unbedingt realistischen Angaben ergibt sich das Verhältnis aus:

$$V= (120.000 - 100.000)/50 \text{ mm} = 400 \text{ Impulse/mm.}$$

Da nun bei beiden Positionen B gemäß Fig. 1b bund R gemäß Fig. 3 die Zangenspezifische Durchbiegung X auftritt, würde bei der Positionsbestimmung der Arbeitselektrode 2 in einer unbelasteten Elektroden-Stellung, wie sie in Fig. 4 dargestellt ist, ein Fehler auftreten, der der Differenz X zwischen den Positionen A und B in Fig. 1 entspricht. Beispiel: Bei Erreichen der Position B gemäß Fig. 1b wird die Istposition auf 0 mm gesetzt. In einer unbelasteten Öffnungsstellung gemäß Fig. 4 wird zum Beispiel 4 mm gemessen, aber 9 mm angezeigt. Die Differenz beträgt demnach 5 mm. Diese Differenz von 5 mm beschreibt den Grad der Durchbiegung, also die Differenz zwischen den Positionen A und B in Fig. 1. Damit die Steuerung nun für das erfindungsgemäße Verfahren zum Steuern der Anpresskraft stets die korrekte Position der Antriebselektrode 2 erfassen kann, wird bei der Kalibrierung noch der folgende zusätzliche Schritt durchgeführt.

Schritt 4: Die Zange wird - ohne Anpresskraft, d.h. im Leerlauf - gemäß Fig. 4 auf ein eigentlich beliebiges Öffnungsmaß Z (zum Beispiel im Bereich von 5 bis 10 mm) gefahren. Dieses Maß Z wird dann genau gemessen, z.B. mittels einer Schieblehre (z.B. 6 mm). Die Steuerung erkennt in dieser Position über die Messimpulse allerdings eine Strecke, die größer als Z ist, weil beim Öffnen aus der mit der Anpresskraft belasteten Schließposition erst die Durchbiegung X gemäß Fig. 1 aufgehoben wird, bevor die Elektroden 2,4 tatsächlich getrennt werden. Folglich entspricht die Zahl der Messimpulse in der Position gemäß Fig. 4 der Summe Z+X, von der nun der exakt gemessene Abstand Z subtrahiert wird. Die resultierende Differenz wird der Steuerung als Parameter für die Durchbiegung X eingegeben. Damit ist die Kalibrierung abgeschlossen.

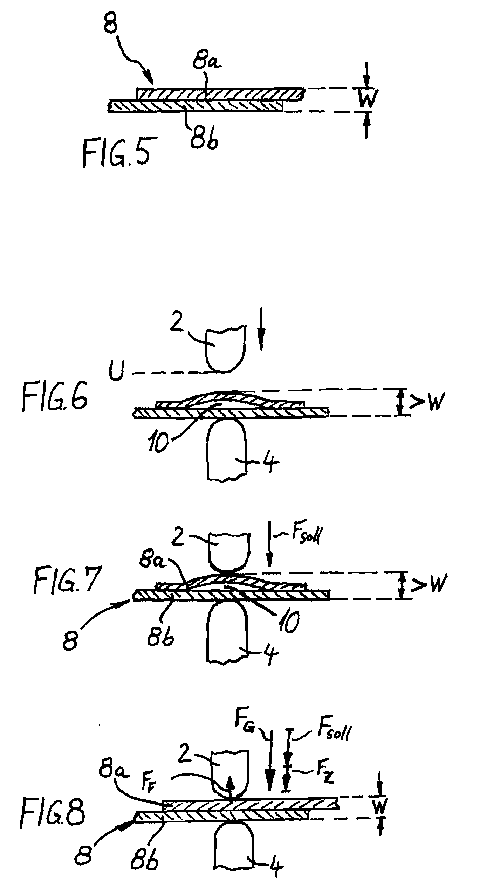

Für das erfindungsgemäße Verfahren zum Steuern der Elektroden-Anpresskraft während des eigentlichen Schweißvorganges wird nun aber gemäß Fig. 5 - als weitere vorbereitende Maßnahme - für das aus zwei Werkstückteilen 8a und 8b bestehende Werkstück 8 dessen Werkstückdicke W gemessen, wenn die Teile 8a und 8b im Schweißbereich direkt, ohne Luftspalt aneinander liegen. Die Werkstückdicke W wird dann ebenfalls der Steuerung vorgegeben und nachfolgend in der Steuerung berücksichtigt.

Was nun das eigentliche Verfahren zum Steuern der Elektroden-Anpresskraft betrifft, so wurde eingangs bereits erläutert, dass bei der vorliegenden Erfindung bevorzugt das Verfahren gemäß EP 1 428 608 B1 angewendet wird. Dies bedeutet, dass zunächst einmalig eine Soll-Anpresskraft $F_{soll}$ für den jeweiligen Schweißvorgang als optimal festgelegt wird. Es wird dann mit geeigneten Mitteln ein dazu erforderlicher Arbeitsstrom für den elektrischen Antrieb ermittelt, wobei dieser Arbeitsstrom ein bestimmtes Antriebsmoment erzeugt. Etwa zeitgleich dazu wird ein bestimmter Fahrstrom des elektrischen Antriebs für eine einmal festgelegte, eigentlich beliebige, aber jedenfalls konstante Fahrgeschwindigkeit für die Hubbewegung ermittelt. Nachfolgend wird bei späteren Hubbewegungen, insbesondere bei der Schließbewegung in jedem späteren Arbeitshub, die tatsächliche Fahrgeschwindigkeit überwacht und erforderlichenfalls, d. h. wenn - z.B. durch veränderte Reibungsverhältnisse im System - die Ist-Geschwindigkeit von der zuvor ermittelten konstanten Fahrgeschwindigkeit abweicht, durch eine entsprechende Änderung des Fahrstroms wieder auf die konstante Fahrgeschwindigkeit gebracht. Diese Bewegung dient somit als Referenzfahrt, um diejenige Änderung des Fahrstroms zu ermitteln, die erforderlich ist, um die Fahrgeschwindigkeit konstant zu halten. Wenn dann bei der Schließbewegung die Arbeitselektrode 2 zum Anlagekontakt am jeweiligen Werkstück kommt, so wird in Abhängigkeit von der zuvor ermittelten Stromänderung auch der Arbeitsstrom in einem entsprechenden Verhältnis geändert. Die daraus resultierende Anpresskraft entspricht dann - trotz der veränderten System-Verhältnisse - dem Sollwert $F_{soll}$.

Anhand der Fig. 6 bis 8 wird jetzt der eigentliche Schweißvorgang unter Anwendung des erfindungsgemäßen Verfahrens beschrieben.

Gemäß Fig. 6 wird die Arbeitselektrode 2 im Arbeitshub in Schließrichtung mit der vorgegebenen Fahrgeschwindigkeit bewegt. In einer bestimmten Position U erfolgt vorzugsweise eine Aktivierung der beschriebenen Kraftregelung. Trifft dann gemäß Fig. 7 die Arbeitselektrode 2 auf das Werkstück 8 beziehungsweise auf das Werkstückteil 8a, so erkennt die Steuerung, dass bei Erhöhung des Antriebsmomentes der aktuelle Elektrodenabstand noch größer als die vorgegebene Werkstückdicke W ist, wenn im Schweißbereich ein Luftspalt 10 vorhanden ist. Deshalb detektiert die Steuerung lediglich eine "Schwergängigkeit", die einer von dem Bauteil 8a bewirkten Federkraft $F_F$ entspricht. Die Steuerung erhöht deshalb selbsttätig den Wert der vorgegebenen Soll-Anpresskraft $F_{soll}$ um eine Zusatzkraft $F_Z$, so dass gemäß Fig. 8 der Luftspalt 10 durch Zusammenpressen der Teile 8a und 8b verfügt wird. Wenn die Steuerung dann erkennt, dass der Elektrodenabstand der vorgegebenen Werkstückdicke W entspricht, wird der Schweißvorgang ausgelöst, wobei dann die tatsächliche Gesamt-Anpresskraft $F_G$ der Summe von Soll-Anpresskraft $F_{soll}$ plus Zusatzkraft $F_Z$ entspricht. Die Zusatzkraft $F_Z$ wirkt aber lediglich gegen die Bauteil-Federkraft $F_F$, so dass sich diese Kraftanteile gegenseitig aufheben. Das Werkstück 8 wird für den Schweißvorgang effektiv nur genau mit der vorgegebenen Soll-Anpresskraft $F_{soll}$ beaufschlagt.

Wenn - abweichend von dem beschriebenen Anwendungsfall - im Schweißbereich kein Luftspalt 10 vorhanden ist, so erkennt die Steuerung dies, wenn bei Erhöhung des Antriebsmomentes auf den für die Soll-Anpresskraft $F_{soll}$ erforderlichen Wert der Elektrodenabstand der vorgegebenen Werkstückdicke W entspricht. Es wird dann unmittelbar der Schweißvorgang ausgelöst.

Zu dem oben beschriebenen "Schritt 2" ist noch zu bemerken, dass es sich um eine optionale, aber vorteilhafte Maßnahme handelt. Im "Schritt 1" wird praktisch der Schließkontakt der Elektroden 2, 4 als "Nullpunkt" gesetzt. Damit ist aber noch keine Aussage über den Zusammenhang zwischen Messimpulsen und Elektroden-Wegstrecke gegeben, sondern es ist nur ein Startwert für das Zählen der Impulse vorgegeben. Mit dem bevorzugten "Schritt 2" wird dann die mechanische Endlage der jeweiligen Schweißzange ermittelt. Grundsätzlich könnte auch sofort vom "Schritt 1" auf das Referenzmaß R gemäß "Schritt 3" gefahren werden, um den Zusammenhang zwischen Messimpulsen und Wegstrecke zu bestimmen. Nach der daraus resultierenden Berechnung könnte der maximale Hub der Zange berechnet werden. Ein berechneter Wert würde aber auf Grund von mechanischen Toleranzen und - im Falle einer X-Zange - auf Grund einer Bewegung gemäß einem Bogenmaß nie dem tatsächlichen mechanischen Anschlag entsprechen. Diese Position (z. B. 200.000 Impulse) ändert sich aber auf Grund der Mechanik nie. Deshalb wird vorzugsweise diese Position als Referenzpunkt gesetzt ("Schritt 2"). Bei einem Spannungsabfall oder sonstigem Verlust der Istposition kann mittels einer Referenzfahrt die Zange auf den mechanischen Anschlag gefahren werden. Dort wird die gespeicherte Position aus dem "Schritt 2" als Istposition gesetzt. Im Gegensatz zu einer manuell durchgeführten Kalibrierung kann dieses Referenzieren auch im Automatikbetrieb durchgeführt werden.

Abschließend sei noch erwähnt, dass eine erfindungsgemäße Schweißzange eine Steuerung zur Durchführung des beschriebenen Verfahrens aufweist. Dazu sind geeignete Mittel zur Eingabe und zum Speichern der bestimmten Werkstückdicke W und des gemäß Fig. 4 gemessenen Elektrodenabstandes Z sowie Mittel zur exakten Positionsbestimmung der Arbeitselektrode 2 vorgesehen. Weiterhin sind eine Einrichtung zum Messen der Fahrgeschwindigkeit der Arbeitselektrode 2 während der Hubbewegung, eine Einrichtung zum Messen des elektrischen Stroms des elektrischen Antriebs, Speichermittel zum Speichern von Änderungen des Stroms gegenüber einem zu einer beliebig festgelegten Soll-Fahrgeschwindigkeit der Hubbewegung gehörigen Fahrstrom sowie eine Auswerteeinheit zur Anpassung des Arbeitsstromes in Abhängigkeit von den gespeicherten Änderungen vorgesehen.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die in dem/jedem unabhängigen Anspruch definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

**Patentansprüche**

1. Verfahren zum Steuern einer Elektroden-Anpresskraft (F) einer Arbeitselektrode (2) einer Schweißzange, wobei die Arbeitselektrode (2) für eine Schließbewegung mittels eines elektromotorischen Servoantriebes unter Zwischenlage eines zu verschweißenden Werkstückes (8) gegen eine Gegenelektrode (4) bewegt und bei Werkstück-Kontakt durch ein bestimmtes Servo-Antriebsmoment mit einer für einen Schweißvorgang vorbestimmten Soll-Anpresskraft ($F_{soll}$) beaufschlagt wird, und wobei während der Elektroden-Schließbewegung geprüft wird, ob ein jeweils aktueller Elektrodenabstand mit einer in einer Steuerung vorgegebenen Soll-Werkstückdicke (W) übereinstimmt, wobei entweder im Falle einer Übereinstimmung umgehend das für die erforderliche Anpresskraft ($F_{soll}$) bestimmte Antriebsmoment vorgegeben und der Schweißvorgang ausgelöst wird, oder im Falle einer Nicht-Übereinstimmung, das heißt wenn der aktuelle Elektrodenabstand noch größer als die vorgegebene Soll-Werkstückdicke (W) ist, zunächst durch ein geeignetes erhöhtes Antriebsmoment die Arbeitselektrode (2) weiter bewegt wird, bis der Elektrodenabstand der vorgegebenen Werkstückdicke (W) entspricht, und erst dann der Schweißvorgang ausgelöst wird, **dadurch gekennzeichnet, dass** bei Erreichen eines der vorgegebenen Werkstückdicke (W) entsprechenden Elektrodenabstandes die Arbeitselektrode (2) mit einer Gesamt-Anpresskraft ($F_G$) beaufschlagt wird, die sich aus der Soll-Anpresskraft ($F_{soll}$) und einer zum Verfügen eines Werkstück-Luftspaltes (10) erforderlichen Zusatzkraft ($F_Z$) zusammensetzt.

2. Verfahren nach Anspruch 1, **gekennzeichnet durch** folgende Schritte:

   a) Festlegung einer Soll-Anpresskraft ($F_{soll}$) und Ermittlung eines dazu erforderlichen Arbeitsstromes für den elektrischen Antrieb sowie
   b) Festlegung einer beliebigen Soll-Fahrgeschwindigkeit für die Hubbewegung der Arbeitselektrode (2) und Ermittlung eines zugehörigen Fahrstromes für den elektrischen Antrieb,
   c) bei späteren Hubbewegungen, insbesondere in jedem weiteren Arbeitshub, Vergleich der tatsächlichen Fahrgeschwindigkeit mit der Soll-Fahrgeschwindigkeit und erforderlichenfalls Anpassung auf die Soll-Fahrgeschwindigkeit **durch** entsprechende Änderung des Fahrstroms und
   d) bei Werkstück-Kontakt Anpassung des Arbeitsstromes in Abhängigkeit von der Änderung des Fahrstroms.

3. Schweißzange zum Herstellen von Punktschweißverbindungen an Werkstücken (8), mit einer Arbeitselektrode (2) und einer Gegenelektrode (4), wobei die Arbeitselektrode (2) über einen Arbeitshub in Richtung der Gegenelektrode (4) und gegen ein Werkstück (8) bewegbar und bei Werkstück-Kontakt mit einer Soll-Anpresskraft ($F_{soll}$) beaufschlagbar ist, wobei zum Antrieb der Arbeitselektrode (2) sowie zum Beaufschlagen mit der Anpresskraft ein elektrischer Antrieb vorgesehen ist, **gekennzeichnet durch** Mittel zur Durchführung des Steuer-Verfahrens nach Anspruch 1 oder 2, und zwar **durch** eine Steuerung mit einer Einrichtung zum Messen der Fahrgeschwindigkeit der Arbeitselektrode (2) während der Hubbewegung, mit einer Einrichtung zum Messen des elektrischen Stroms des elektrischen Antriebs, mit Speichermitteln zum Speichern von Änderungen des Stroms gegenüber einem zu einer beliebig festgelegten Soll-Fahrgeschwindigkeit der Hubbewegung gehörigen Fahrstrom sowie mit einer Auswerteeinheit zur Anpassung des Arbeitsstromes in Abhängigkeit von den gespeicherten Änderungen.

4. Schweißzange nach Anspruch 3, **gekennzeichnet durch** Mittel zur Eingabe und zum Speichern einer vorbestimmten Werkstückdicke (W) und eines in einem unbelasteten Zustand gemessenen Elektrodenabstandes (Z) sowie **durch** Mittel zur exakten Positionsbestimmung der Arbeitselektrode (2).

FIG. 1

2

A ────────────────

4

$F_{Kal}$

2

X

4

B

a)

b)

2

↑

y

FIG. 2

4

2

$F_{Kal}$  FIG. 3

R

6

4

FIG. 4

2

z

4

FIG.5

FIG.6

FIG.7

FIG.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0071291 A1

- EP 1428608 B1